# EUROPEAN PATENT APPLICATION

(11) **EP 1 763 214 A1**
(43) Date of publication of application: **14.03.2007**
(21) Application number: 06380227.6
(22) Date of filing: 08.08.2006
(51) Int. Cl.: H04M 15/00, H04L 29/06

(54) **Process for charging a communications service**

(30) Priority: 08.09.2005 ES 200502188
(71) Applicant: Vodafone Group PLC, Newbury Berkshire RG14 2FN (GB); Vodafone Espana, S.A., 28108 Alcobendas, Madrid (ES)
(72) Inventor: Frisa Rubio, Raquel, 50003 Zaragoza (ES); Ocòn Càrdenas, Sergio, 28050 Madrid (ES); Cajigas Bringas, Guillermo, 28030 Madrid (ES)
(74) Representative: Carvajal y Urquijo, Isabel

(57) **Abstract**

A process for charging a communications service, said service based on a first server in a communications network that also includes a second charging server, comprising:
- performing said service between at least two terminals operating inside said communications network,
- said first server sending data indicating a result of said service to said second charging server.
- said charging server charging a user or user account of either terminal with the cost C of said service according to the result of the service according to preestablished conditions.

## Description

### Field of the Invention

The present invention is comprised within the field of communications and, more specifically, in the possibility of charging/billing a service between several terminals (for example, mobile terminals) in a different way, according to the result of said service.

### Background of the Invention

There are currently various parameters for charging a communications service, depending on the features of the user and the services stored in the network.

For example, a voice call can be charged in a different way according to:
- Starting and ending time, etc.
- The place from/to which the call is made
- Calling number
- Called number
- Number of participants (conference)
- Special additional charging services (call forwarding, etc)
- Etc.

However, charging parameters depending on the result of the service are not used, except canceling the charge when the service has a defect in its development.

The management and the charging process are explained in the 3GPP standard 32.240 (www.3gpp.org), in the standard 32.360 for IMS and in 32.296 for interfaces.

As described in the standard 32.240, chapter 5, charging can be classified into two distinct classes, namely "event based charging" and "session based charging".

Event based charging implies that there is a chargeable event defined as a single end-user-to-mobile-network transaction, such as for example, the sending of a multimedia message. This chargeable event is then mapped to an appropriate charging event, resulting in a single charging data record (CDR) or in a single credit control and resource usage authorization procedure.

In contrast, in the case of session based charging, this is characterized by the existence of a user session. This user session is then matched with a charging session, resulting in the generation of multiple chargeable/charging events and the creation of one or more CDRs in "offline"/disconnected charging or the performance of a credit control session in "online"/connected charging. (The 3GPP standard 32.240 defines online and offline charging. "Offline" charging: charging mechanism wherein charging information does not affect, in real-time, the service rendered. "Online" charging: charging mechanism wherein charging information can affect, in real-time, the service rendered and therefore a direct interaction of the charging mechanism with the session control/service is required.)

The standard likewise explains the charging process and how this is carried out according to use. The possibility of charging according to the result of the service does not exist.

### Description of the Invention

The invention relates to a process for charging a communications service according to claim 1. Preferred embodiments of the process are defined in the dependent claims.

According to an aspect of the present invention, the latter provides a process which allows charging a communications service according to the result thereof, a signal being sent indicating the result of said service.

In other words, the dynamic charging of a service based on the result thereof is allowed by means of the process of the invention.

A process for charging a communications service, said service based on a first server in a communications network that also includes a second charging server, comprising:
- calculating a cost C associated to said service according to parameters associated to said service,
- performing said service between at least two terminals operating inside said communications network,
- said first server sending data indicating a result of said service to said second charging server,
- said charging server charging a user or user account of either terminal with the cost C of said service according to the result of the service according to pre-established conditions.

Said service is preferably a game service between several people or a multiplayer game in which the winner is excluded from the charge.

Said signal indicating the result of the service can include an identifier of the mobile terminal that loses the game. Preferably said pre-established conditions consist of charging the user that loses the game with the entire cost C of said game.

Said signal indicating the result of the service can include an identifier of the mobile terminal that wins the game. Preferably said pre-established conditions consist of charging cost C of said game in equal parts C/N between N users of mobile terminals, N being greater than or equal to 1, excluding the winning user.

The process of the invention can further comprise having an amount C from each of the users or user accounts of the mobile terminals at the start of the service.

In this case, the invention comprises refunding cost C to each N user, N being greater than or equal to 1, excluding the losing user.

Or cost C can also be refunded to the user or user account of said winning mobile terminal.

Another ability is added to the network by means of the process of the invention: the ability to know the result of an event which cannot otherwise be obtained by the state of the network or of the user, rather an element external to the same and depending on an external logic has to be asked: in the case of a game between two or more players, the winner depends on the type of game; thus, for example, a checkmate in chess results from the position of the pieces on the board and whose turn it is to move.

### Description of a Preferred Embodiment of the Invention

The process of the invention is applicable, for example, to a game between two users in which the result thereof is that one player wins and the other loses or there is a tie, such as a in a game of chess.

The process of the invention acts in the following way, assuming a game between user A and user B who have associated credit accounts:

### A) With reserve

A credit is reserved for an amount C in the accounts of users A and B corresponding to the total cost of the game for both players.

Said cost is defined in a charging system assigning a charge to the same depending on the parameters of the system. This cost assigning process is the same as the one currently carried out for any service. Therefore, said price depends on the values that the system can obtain regarding the environment at the start of the game (number of players, identifiers thereof, identifiers of the game, discounts, etc). The cost of the game, within this structure, is formed with the parameters of the game and with the costs associated to traffic, measured in time or in volume.

The game server informs the measuring system about the result of the service, which can be:
- User A has won (B has lost): A's reserve is cancelled and B's reserve is taken with the subsequent decrease of credit in B's account (A's account remains the same)
- User B has won (A has lost): B's reserve is cancelled and A's reserve is taken, with the subsequent decrease of credit in A's account (B's account remains the same)
- Tie: Half of A's and B's reserve is taken and the other half is refunded, with the subsequent decrease by C/2 in the credit of A's and B's accounts.
- Error: Both reserves are cancelled.

In other words, the final charge is carried out depending on the result of the game. With the currently existing processes, it is only possible to charge the game, not deciding whether or not the winner is charged.

### B) Without reserve

System X takes away an amount C from the accounts of users A and B corresponding to the total cost of the game for both players.

The game server informs the measuring system about the result of the service, which can be:
- User A has won (B has lost): The credit of A's account is refunded with the subsequent net decrease of credit in B's account (A's account remains the same).
- User B has won (A has lost): The credit of B's account is refunded with the subsequent net decrease of credit in A's account (B's account remains the same).
- Tie: Half of A's and B's credit is refunded with the subsequent net decrease by C/2 in the credit of A's and B's accounts.
- Error: C credits are refunded to both users.

The idea is to essentially offer two possibilities: "reserve + performance" and "direct charge + refund".

There are other alternatives to these examples, such as for example: not reserving any amount *a priori* but carrying out the entire charging process at the end.

When there is an error, it is possible to apply any practice apart from refunding the money/canceling the reserve. For example, the game can be charged as if it had ended in a tie or the entire amount can be charged to both users in order to avoid fraud.

## Claims

1. A process for charging a communications service, said service based on a first server in a communications network that also includes a second charging server, comprising:
- performing said service between at least two terminals operating inside said communications network,
- said first server sending data indicating a result of said service to said second charging server,
- said charging server charging a user or user account of one or the other terminal with the cost C of said service according to the result of the service according to pre-established conditions.

2. A process according to claim 1, **characterized in that** said service is a multiplayer game.

3. A process according to claim 2, **characterized in that** said signal indicating the result of the service includes an identifier of the mobile terminal that loses the game.

4. A process according to claim 3, **characterized in that** said pre-established conditions consist of charging the user that loses the game with the entire cost C of said game.

5. A process according to claim 2, **characterized in that** said signal indicating the result of the service includes an identifier of the user that wins the game.

6. A process according to claim 5, **characterized in that** said pre-established conditions consist of charging cost C of said game in equal parts C/N between N users of mobile terminals, N being greater than or equal to 1, excluding the winning user.

7. A process according to any of claims 1-6, **characterized in that** it further comprises:
- having an amount C from each of the users or user accounts of the mobile terminals at the start of the service.

8. A process according to claim 7 when it is dependent on claim 3, **characterized in that** it further comprises refunding cost C to each user N of the mobile terminals, N being greater than or equal to 1, excluding the losing user.

9. A process according to claim 7 when it is dependent on claim 5, **characterized in that** it further comprises refunding cost C to the user or user account of said winning mobile terminal.

10. A process according to any of the previous claims, **characterized in that** said cost C associated to said service is previously calculated by the charging engine according to parameters associated to said service.
